# EUROPEAN PATENT APPLICATION

(11) **EP 2 037 261 A1**
(43) Date of publication of application: **18.03.2009**
(21) Application number: 08164090.6
(22) Date of filing: 10.09.2008
(51) Int. Cl.: G01N 27/90

(54) **A phased scan eddy current array probe and a phase scanning method which provide complete and continuous coverage of a test surface without mechanical scanning**

(30) Priority: 11.09.2007 US 971293 P; 09.09.2008 US 206798
(71) Applicant: Olympus NDT, Waltham, MA 02453 (US)
(72) Inventor: Lepage, Benoit, Quebec City, Quebec G2J1M5 (CA); Langlois, Pierre, Quebec City, Quebec G1E 7J5 (CA); Drummy, Michael, North Reading, MA 01864 (US)
(74) Representative: Franzolin, Luigi

(57) **Abstract**

A phased scanning method and phased scan eddy current array probe suitable for in-situ eddy current inspection of a structure without mechanical scanning. Overlapping subsets of the sensor elements within the array probe are dynamically connected in series and sequentially scanned to simulate the mechanical motion of a conventional array probe along a test surface. An algorithm to effectively balance the scan data is provided which comprises obtaining a reference scan at the time of probe installation, storing the measurement data from this reference scan in a memory device located within the probe, subtracting this reference curve from the curve obtained by all subsequent measurement scans to produce an adjusted curve, and processing the resulting adjusted curve through a high pass filter. A technique for verifying sensor elements of an eddy current array probe after permanent or semi-permanent installation against a test structure is also provided.

## Description

### CROSS-REFERENCE TO RELATED APPLICATION

This application is based on and claims priority to U.S. Provisional Patent Application Serial No. 60/971,293, filed on September 11, 2007 and titled A PHASED SCAN EDDY CURRENT ARRAY PROBE AND A PHASED SCANNING METHOD WHICH PROVIDE COMPLETE AND CONTINUOUS COVERAGE OF A TEST SURFACE WITHOUT MECHANICAL SCANNING, the entire contents of which are hereby incorporated by reference.

### BACKGROUND OF INVENTION

The present invention relates to non-destructive eddy current inspection systems, and more particularly to a phased scan eddy current array probe and method for using said probe such that the surface of a structure under test can be inspected without moving said probe relative to said surface.

Any discussion of the related art throughout this specification should in no way be considered as an admission that such art is widely known or forms a part of the common general knowledge in the field.

Eddy current inspection is commonly used to monitor the structural integrity of complex mechanical assemblies, such as critical support fixtures onboard an aircraft or critical points along a bridge or railway. An array of inspection coils, typically referred to as an eddy current array probe, is positioned near a piece to be inspected and driven with high frequency alternating electrical currents which, in turn, create an alternating magnetic field near the surface of the test piece. This magnetic field induces eddy currents in the conductive surface of the test piece which are sensed and measured by the eddy current array probe. If a flaw or defect is present on the surface of the test piece, the flow of eddy currents will be altered, and this change will be readily detected by the eddy current array probe. The amplitude and position of these current changes can then be analyzed and recorded, for example through visual inspection by a test operator or processed through an automated alarm algorithm, to determine the size and location of the defect or flaw. Eddy current array probes typically comprise a plurality of inspection coils arranged in such a way as to be conducive to a particular inspection task.

In a typical inspection operation, an eddy current array probe is moved across the surface of a structure under test, such that a complete, continuous scan of said surface is obtained. For most inspection operations, this is performed by a test operator manually sliding the probe along the surface of the structure under test at some constant speed. This technique becomes problematic, however, when the surface to be inspected is inaccessible or accessible only through great effort, such is often the case in structural health monitoring. For example, certain support fixtures located inside complex mechanical structures, such as aircraft engines, can only be accessed for manual scanning by partial disassembly of said structure, an undesirable and usually time consuming procedure. Also, critical support beams in large bridge assemblies can often be accessed only with great effort and risk of injury to a test operator.

U.S. Patent No. 7,246,521 to Kim teaches a diagnostic system for structural health monitoring which includes specially designed sensors permanently mounted along key points of the structure under test. While eddy current array probes can be used in a similar fashion--that is, permanently mounted to a test surface and excited through a cable connected back to a remote instrument--inspection scans will need to be performed without moving the array probe relative to the surface of the structure under test. This inspection technique--commonly referred to static scanning--holds two major limitations which significantly reduce the effectiveness of the inspection: (1) blind spots between the individual coils in the array, and (2) limitations on probe balancing.

No matter how tightly arranged a coil array is blind spots will exist between the individual coils. These blind spots--regions where the coils will not be able to sense a crack or other defect--are not a problem in a manual scanning operation because each coil is moved continuously across the surface of the structure under test. However, in a static scanning operation--as would be the case in a permanently mounted probe--the eddy current array probe is not moved relative to the test surface, and those areas between the coils cannot be inspected.

U.S. Patent No. 5,659,248 to Hedengren et al discloses an eddy current array probe to eliminate this very problem of blind spots between coils in a static scanning operation. Hedengren teaches an eddy current array probe which comprises a three dimensional array of coils. Layers of two dimensional coil arrays are stacked atop each other such that the coil elements of any one layer are staggered with respect to the others. In this way, one layer covers the blind spots of the others, effectively providing continuous coverage of the entire surface of the structure under test. While Hedengren provides an effective solution to the problem of static scanning with an eddy current array probe, the resulting probe is complex to manufacture and requires at least twice the number of sensor elements (coils) as would be used in a single layer coil arrangement. The array probe taught by Hedengren also significantly limits the coil thickness of the individual elements, as relatively thick coils--and consequentially relatively thick layers--will result in the sensor elements in each layer being a different distance from the surface of the structure under test. These differing offset distances can significantly limit detection capabilities of the array probe.

Hedengren also fails to adequately address the second limitation of a permanently mounted eddy current array probe: probe balancing. In an inspection situation where an eddy current array probe must be permanently mounted to a test surface, such as in the structural integrity monitoring system described above, the probe cannot be removed for balancing on a reference structure. This becomes even more problematic in systems where different instruments will be used with the mounted probe over the life of the structure. Aging of the probe and the structure as well as different instrument calibrations over time will significantly limit the effectiveness of the inspection operation.

Accordingly, it would be advantageous to provide a method of statically scanning a structure under test such that the scan provides complete and continuous coverage of the surface of said structure without moving the probe relative to said structure. Further it would be advantageous to provide an eddy current array probe for use with said method which comprises only a single layer of sensor elements, said layer conforming and adjacent to the surface of said structure. It would also be advantageous to provide an effective method of balancing an eddy current array probe without the need to remove it from a structure under test.

### SUMMARY OF THE DISCLOSURE

It is the object of the present disclosure to overcome the problems associated with prior art. This is attained by introducing the phased scan eddy current array probe and the phased scanning method of the present disclosure. The phased scan eddy current array probe of the present disclosure is comprised of an array of coils arranged into a fixture conforming to the geometry of the test surface, a coil interconnection circuit used to sequentially connect subsets of the individual coils in series, and a memory device which stores a Reference Curve used to adjust scan data and provide an effective balancing algorithm.

The coils in the eddy current array probe are arranged such that they adequately cover the surface of the structure under test. During the scanning process, subsets of the coils are dynamically connected and disconnected, through the use of the coil interconnection circuit, in series. When wired together serially, the coils effectively act as a larger coil, sensitive to the entire area of the surface between the individual coils. By overlapping these coil subsets--that is, by controlling the interconnection sequence such that each subset contains at least one element of the previous subset--all areas which would have represented blind spots to conventional static scanning means are covered.

During installation of the eddy current array probe of the present disclosure, the array probe is balanced on its first set of coils and the surface of the structure under test is then scanned. The impedance curve resulting from this initial scan--referred to as the Reference Curve--is stored on the memory device installed within the eddy current array probe. On all subsequent test scans, the probe is balanced on its first set of coils, and the structure under test then scanned. The impedance curve resulting from the test scan--referred to as the Raw Inspection Curve--is then adjusted using the stored Reference Curve, which is recalled from the onboard memory device, resulting in what the present disclosure terms an Adjusted Curve. This Adjusted Curve is then filtered with a high pass filter to produce the Final Inspection Curve, which represents an effectively balanced scan of the structure under test.

Accordingly it is the object of the present disclosure to provide a method of statically scanning a structure under test by eddy current means such that the scan provides complete and continuous coverage of the surface of said structure.

It is also the object of the present disclosure to provide an eddy current array probe for use with said method which comprises an array of coils co-located in a single layer conforming and adjacent to the surface under test, which can be dynamically connected serially in subsets to effectively function as larger coils.

It is further an object of the present disclosure to provide an effective method of balancing said eddy current array probe through the use of a reference curve, which is acquired at the time of probe installation, stored inside the probe itself through the use of an onboard memory device, and used to adjust all subsequent test scans.

It is also an object of the present disclosure to include a high pass filtering stage with this effective balancing algorithm such that a maximize signal-to-noise ratio of the final measurement curve is achieved.

Other features and advantages of the present invention will become apparent from the following description of the invention that refers to the accompanying drawings.

### BRIEF DESCRIPTION OF THE DRAWINGS

FIGS. **1A-1B** are perspective drawings illustrating the phased scan eddy current array probe of the present disclosure and a test structure;

FIG. **2A** is an exploded assembly diagram of a mechanical assembly which includes the test structure shown in FIG. **1** and shows the phased scan eddy current array probe of the present disclosure being permanently installed against said test structure;

FIG. **2B** is a cutaway assembly diagram of the mechanical structure of FIG. **2A** including the permanently mounted phased scan eddy current array probe of the present disclosure;

FIG. **3A** is a diagram illustrating the effective coverage area of two eddy current coils which are energized independently;

FIG. **3B** is a diagram illustrating the effective coverage area of two eddy current coils which are connected in series and energized as a single element;

FIG. **3C** is a diagram illustrating the effective coverage area of four eddy current coils which are connected in series and energized as a single element;

FIG. **4A** is a diagram illustrating the scan pattern of the preferred embodiment of the present disclosure;

FIG. **4B** is a diagram illustrating the scan pattern of a two-dimensional phased scan eddy current array probe using the phased scanning method of the present disclosure;

FIG. **5** is a simplified schematic diagram of the phased scan eddy current array probe of the present disclosure;

FIGS. **6** and **6a** are simplified schematic diagrams of the coil interconnection circuits of the preferred embodiment of the present disclosure;

FIG. **7** is a flow chart describing the installation procedure for the phased scan eddy current array probe of the present disclosure, including steps for obtaining and storing the Reference Curve;

FIG. **8** is a flow chart describing the phased scanning method of the present disclosure, which provides an effective balancing operation on the measurement data;

FIG. **9** shows a measurement data plot of an exemplary Reference Curve taken with the phased scan eddy current array probe of the present disclosure;

FIG. **10** shows two exemplary Raw Inspection Curves representing measurement data taken with the phased scan eddy current array probe of the present disclosure on both a defective and a defect free test structure;

FIGS. **11A-11B** shows two exemplary Adjusted Curves calculated from measurement data taken with the phased scan eddy current array probe of the present disclosure on both a defective and a defect free test structure;

FIGS. **12A-12B** shows two exemplary Final Inspection Curves, of both a defective and a defect free test structure, obtained through the methods of the present disclosure.

FIGS. **13****,** **14****,** **15****,** **15a** and **15b** show examples of coil group array connection configurations.

FIG. **16** shows an exemplary Coil Array Fabric Cell that provides the means for a plurality of coil group series connection configurations with a minimal amount of connections to the host instrument.

FIG. **17** shows an exemplary Coil Array Fabric that provides the means for a plurality of Coil Array Fabric Cells to be configured with independent COIL_GROUP_SEND and COIL_GROUP_RTN connections.

### DETAILED DESCRIPTION

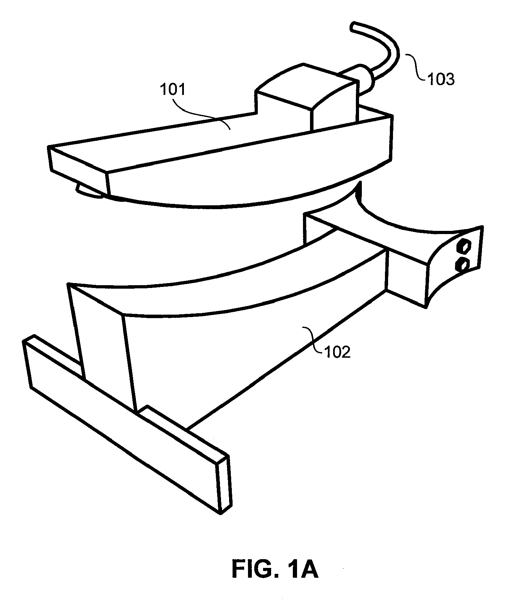

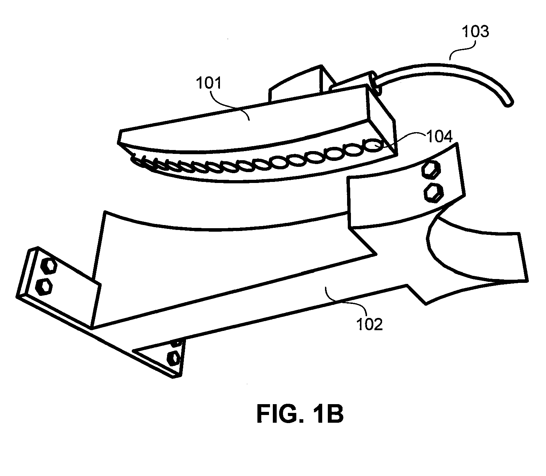

FIGS. **1A** and **1B** illustrate the preferred embodiment of the phased scan eddy current array probe **101** of the present disclosure as well as a test structure **102** for which it has been designed to inspect. The individual coils **104** of the array probe **101** are fixed in a curved linear array which covers and conforms to the curved surface of the test structure **102.** Probe cable assembly **103** connects the array probe **101** to an instrument located away from the test structure **102.** As will be described in the following discussion, the array probe **101** comprises not only the coils **104** shown on its mating surface, but also a coil interconnection circuit and a memory device, such as, but not limited to, an EEPROM or a flash memory chip. These additional components will become relevant to the phased scanning method of the present disclosure.

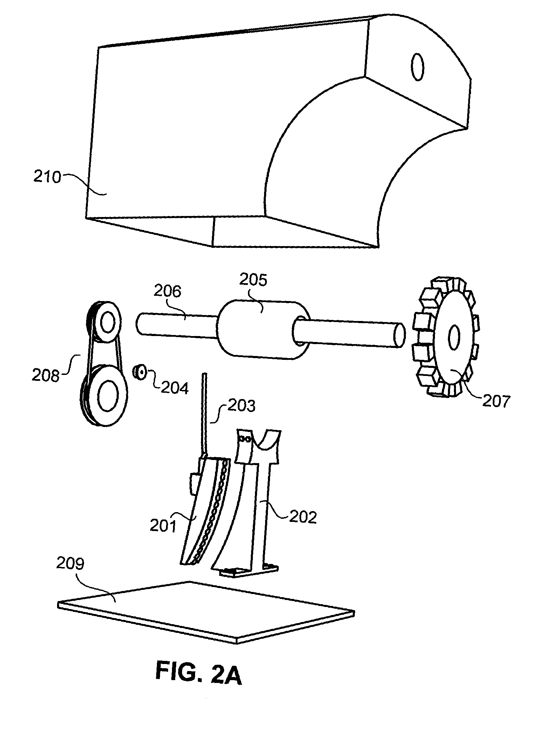

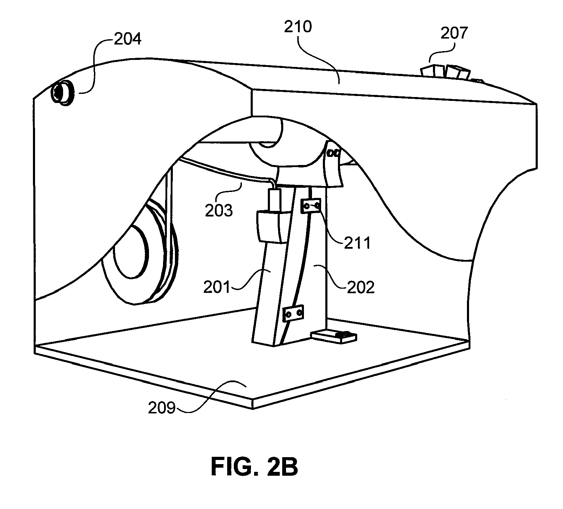

FIGS. **2A** and **2B** show the phased scan eddy current array probe **201** and the test structure **202 (101** and **202**, respectively, in FIGS. **1A** and **1B**) installed into a large mechanical assembly. The array probe **201** is mounted to the test structure **202** by a securement apparatus **211**. It should be noted that while this securement apparatus **211** is depicted as a bolt-on bracket in FIG. **2B**, the present disclosure is not limited in this regard. Indeed, any securement means, such as, but not limited to, glue or epoxy, mounting straps, or a self locking socket fixture, can be used to mount the array probe **201** to the test structure **202** such as is conducive to the test environment and material.

Completing the probe mounting assembly, the probe cable **203** is brought out to a connector **204** on the rear surface of the assembly housing **210.** It should be noted that in such a configuration, the array probe of the present disclosure **201** is accessible only through great effort after the mechanical assembly has been constructed. Thus, the assembly depicted in FIGS. **2A** and **2B** illustrates an example of inspection operation requiring the use of both the phased scanning method and the phased scan eddy current array probe of the present disclosure.

Alternatively, where providing a cable may be impractical, a wireless data transmitter (not shown) may be provided to receive and transmit scan data to a nearby (or remote) data receiver. In such embodiments, locally available AC power might be tapped and DC power generated to power the probe circuitry. In one embodiment, solar cells may receive light from a light source located within the housing **210**, to generate power for the probe circuitry.

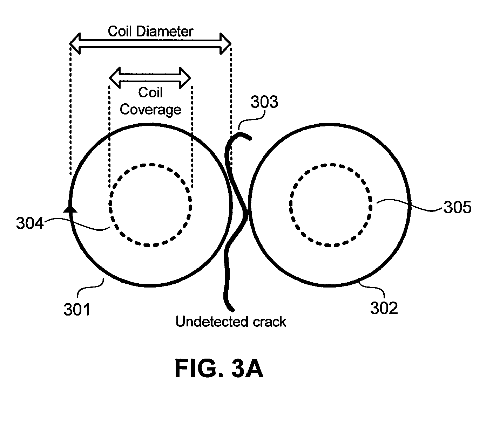

FIG. **3A** illustrates the surface area inspected by a pair of eddy current coils in a conventional array probe. A first coil **301** and a second coil **302** are positioned adjacent to each other in an array. A defect **303** is positioned directly between the first coil **301** and the second coil **302**. The dashed circles **304** and **305** show the coverage area--which is approximately half the coils' physical diameters--of the first and second coils **301** and **302,** respectively. The area between the coils outside of these dashed circles represents a blind spot where a defect cannot be detected. In a static scanning operation where the first **301** and second **302** coils are not moved with respect to the surface under test--and thus not moved with respect to the defect **303** on said surface--the defect **303** remains well inside this blind spot and is not detected.

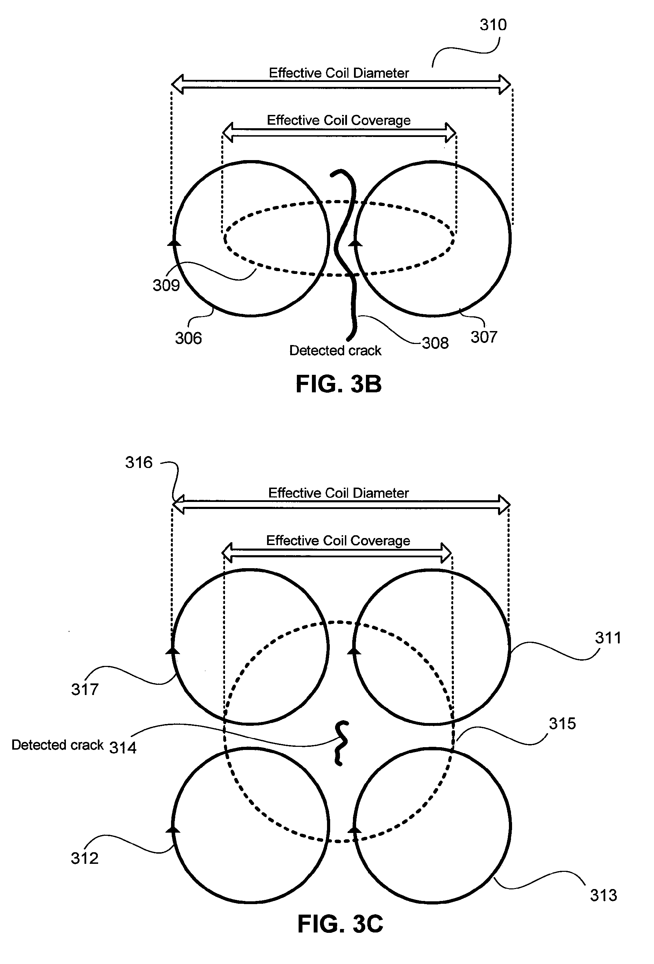

FIG. **3B** illustrates the surface area inspected by a pair of eddy coils in the phased scan eddy current array probe of the present disclosure. In this case, a first coil **306** and a second coil **307** are connected together in series and energized together as a single element. As before, a defect **308** is situated between the first **306** and second **307** coils in what would be a blind spot for a conventional eddy current array probe. The dashed oval **309** shows the coverage area of the serially connected first **306** and second **307** coils. Wired together in series, the two coils 306 and **307** effectively operate as a single larger coil with a coverage area which includes the surface region between them. In this case the defect is detected without the need to move the coils **306** and **307** with respect to the surface of the structure under test.

Similarly, FIG. **3C** illustrates the surface area inspected by four eddy coils in the phased scan eddy current array probe of the present disclosure. In this case, a first coil **317**, a second coil **311** , a third coil **313,** and a fourth coil **312** are connected together in series and energized together as a single element. As before, defect **314** is situated at the geometric center of said four coil configuration in what would be a blind spot for a conventional eddy current array probe. The dashed oval **315** shows the coverage area of the serially connected first coil **317,** second coil **311** , third coil **313,** and fourth coil **312**. Wired together in series, said coils effectively operate as a single larger coil with a coverage area which includes the surface region between them. In this case the defect is detected without the need to move the said coils with respect to the surface of the structure under test.

While this technique of serially connecting subsets of coils within an array was developed primarily for the phased scanning method of the present disclosure, the inventors also conceive of a utility for said technique useful in a conventional mechanical scanning inspection as well. In such an inspection operation, the coils of an eddy current array probe can be connected in series in such a way as to provide a variable control on coil size, as the serially connected coils in each subset will effectively act as a larger coil. In this way a single eddy current array probe can be used in a variety of different inspection operations, adding versatility and value to said probe.

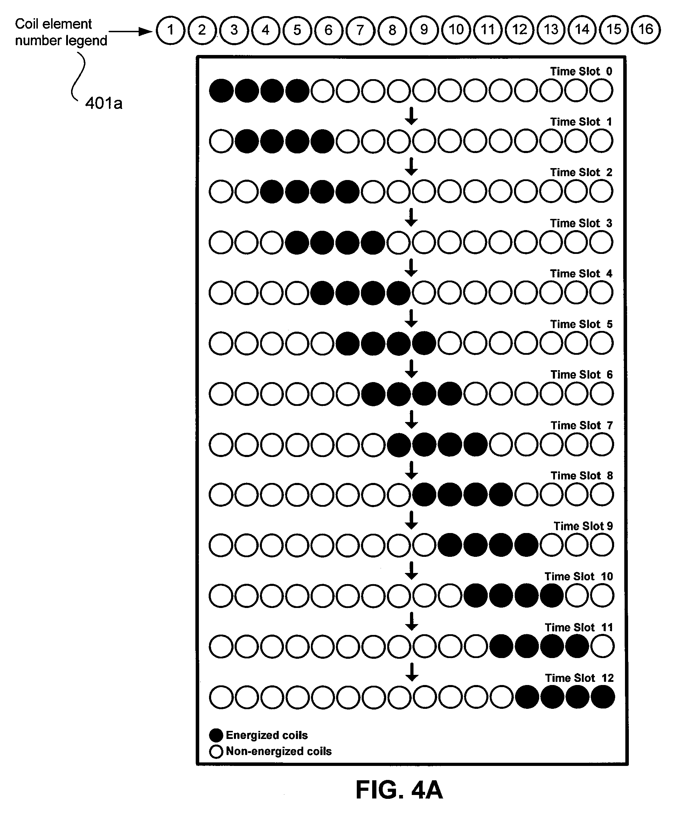

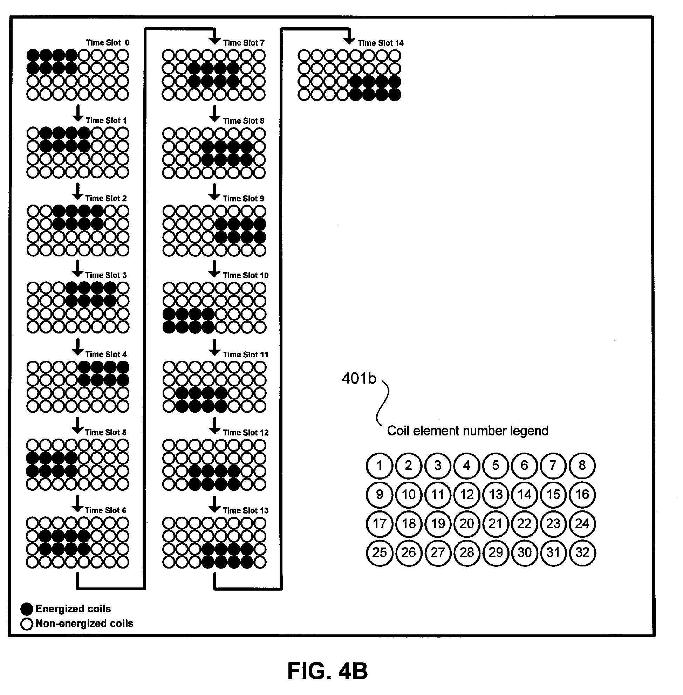

FIG. **4A** illustrates the scan pattern of the preferred embodiment of the present disclosure. Coil number legends **401a** and **401b** (FIG. 4B) indicate the number assigned for each coil element, the send and return connections of which (not shown) are arranged such that the magnetic field produced by each will be in phase when connected to the same, or equivalent, COIL_SEND and COIL_RTN signal, or signals, respectively, provided by the instrument (not shown). COIL_SEND signals **1301, 1401, 1501, 1501a,** and **1501b,** and COIL_RTN signals **1302, 1402, 1505, 1505a** and 1**506** are shown in FIGS. 1**3****,** **14****,** **15****,** **15a** and 15b for exemplary eddy current instrument front ends. In the preferred embodiment, the sixteen elements of the phased scan eddy current array probe are serially connected into subsets of four. These subsets of coils are dynamically connected serially by the coil interconnection circuit such that each subsequent subset overlaps the previous subset by three elements--that is, each subset includes the last three sensor elements contained in the previous subset. In this way, thirteen unique acquisitions are made (represented by the thirteen Time Slots in FIG. **4A**) simulating a mechanical scan with a four element probe and providing complete and continuous scan coverage of the structure under test.

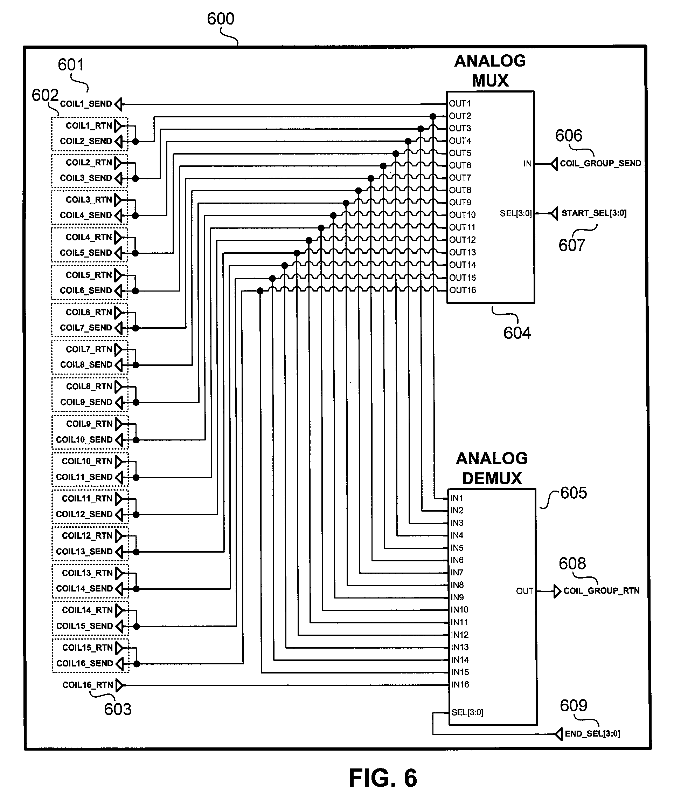

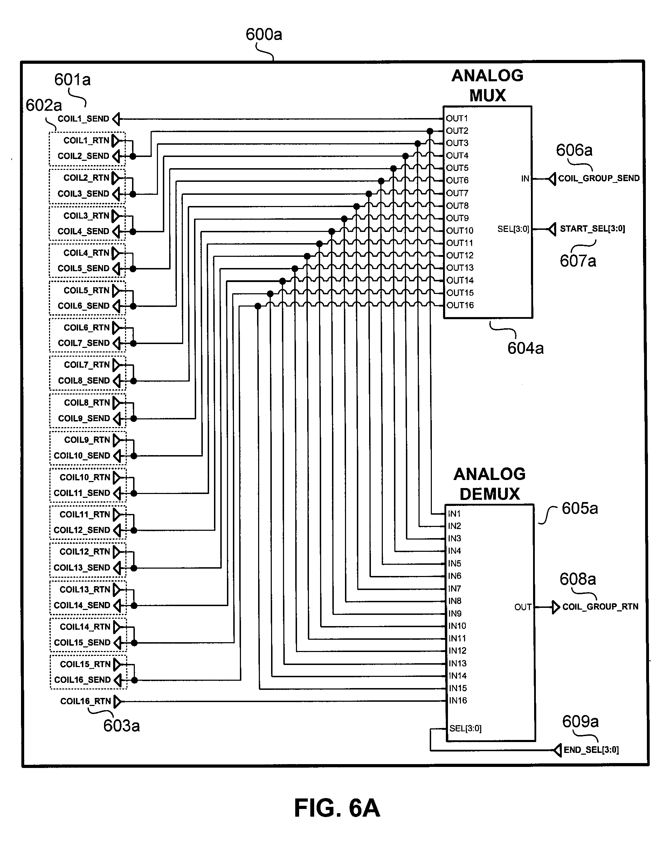

It should be noted that while the preferred embodiment makes use of a sixteen element linear array probe and operates this probe in subsets of four elements with an overlap depth of three, the invention of the present disclosure is not limited in this regard. Indeed, it will be shown in the following discussion of the coil interconnection circuit (shown in detail in FIG. 6) that said circuit is well suited to interconnect subsets of coils of any size and of any overlap depth. Similarly, it should be clear from the following discussion that the methods of the present disclosure can be used with an array probe of any dimensions, including, but not limited to two dimensional array probes. Along this line, FIG. **4B** illustrates the scan pattern of a two-dimensional (2-D) phased scan eddy current array probe which makes use of the phased scanning method of the present disclosure.

Coil element legend **401b** indicates the number assigned for each coil element the two dimensional (2-D) coil array configuration of FIG. **4B**, said elements are connected to terminals of coil interconnection circuits **600** and **600a** of FIGs. **6** and **6a**, respectively, as described in the following interconnect table. Specifically, interconnection circuit **600** is connected to odd number rows comprised of coil elements 1 through 8 and 17 through 24, and interconnection circuit **600a** is connected to even number rows comprised of coil elements 9 through 16 and 25 through 32.

In one embodiment, referred to as the 'Parallel SEND/RTN mode', the 2-D coil array configuration interconnect method provides the means for parallel adjacent groups of four energized coils, as shown by the time slots 0 through 16 of **FIG. 4B**, to be driven by separate interconnect circuits **600** and **600a**. Preferably, the signals provided to COIL_GROUP_SEND **606** and **606a** are substantially equivalent in terms of frequency, amplitude and phase to achieve optimal magnetic field matching; however, it is within the scope of this embodiment to provide signals to COIL_GROUP_SEND that are not equivalent in this regard. COIL_GROUP RTN **608** and **608a** are coupled or processed together for this embodiment.

Alternatively, in a second embodiment of the two 2-D coil array configuration of FIG. **4B****,** referred to as the 'Series SEND/RTN mode' all of the interconnections are the same as for the first embodiment described above, except that COIL_GROUP_RTN **608** (FIG. **6**) is connected only to COIL_GROUP_SEND **606a** (FIG. **6a**). In the example of time slots 0 through 4 and 10 through 14 of FIG. **4B****,** the Series SEND/RTN mode provides the means to connect the end of a coil group in an odd row to the start of any other coil group in an even row. In the example of time slots 5 through 9, the Series SEND/RTN mode provides the means to connect the end of a coil group in an even row to the start of another coil group in an odd row.

It should be noted that although the 2-D coil array configuration of FIG. **4B** is shown with energized coil group sizes of 4, and adjacent row placement of said coil groups, the present disclosure is not limited in this regard. Indeed, energized coil groups of any size located anywhere within the 2-D coil element array may be realized by applying the methods of the present disclosure.

| **COIL INTERCONNECT TABLE** | | |
|---|---|---|
| **Terminal of COIL interconnection circuit 600** | **Terminal of COIL interconnection circuit 600a** | **COIL element 400b** |
| COIL1_SEND | | 1 |
| COIL1_RTN, COIL2_SEND | | 2 |
| COIL2_RTN, COIL3_SEND | | 3 |
| COIL3_RTN, COIL4_SEND | | 4 |
| COIL4_RTN, COIL5_SEND | | 5 |
| COIL5_RTN, COIL6_SEND | | 6 |
| COIL6_RTN, COIL7_SEND | | 7 |
| COIL7_RTN, COIL8_SEND | | 8 |
| | | |
| | COIL1_SEND | 9 |
| | COIL1_RTN, COIL2_SEND | 10 |
| | COIL2_RTN, COIL3_SEND | 11 |
| | COIL3_RTN, COIL4_SEND | 12 |
| | COIL4_RTN, COIL5_SEND | 13 |
| | COIL5_RTN, COIL6_SEND | 14 |
| | COIL6_RTN,COIL7_SEND | 15 |
| | COIL7_RTN, COIL8_SEND | 16 |
| | | |
| COIL9_RTN, COIL9_SEND | | 17 |
| COIL9_RTN, COIL10_SEND | | 18 |
| COIL10_RTN, COIL11_SEND | | 19 |
| COIL11_RTN, COIL12_SEND | | 20 |
| COIL13_RTN, COIL13_SEND | | 21 |
| COIL13_RTN, COIL14_SEND | | 22 |
| COIL14_RTN, COIL15_SEND | | 23 |
| COIL6_RTN | | 24 |
| | | |
| | COIL8_RTN, COIL9_SEND | 25 |
| | COIL9_RTN, COIL10_SEND | 26 |
| | COIL10_RTN, COIL11_SEND | 27 |
| | COIL11_RTN, COIL12_SEND | 28 |
| | COIL12_RTN, COIL13_SEND | 29 |
| | COIL13_RTN, COIL14_SEND | 30 |
| | COIL14_RTN, COIL15_SEND | 31 |
| | COIL6_RTN | 32 |

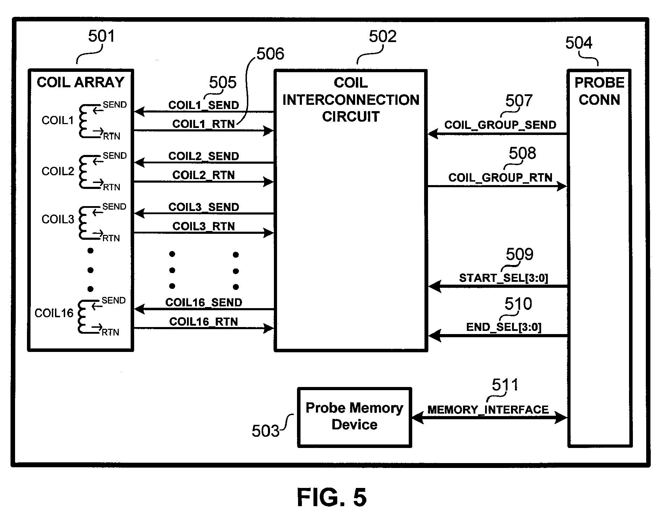

FIG. **5** illustrates the simplified schematic of the phased scan eddy current array probe of the present disclosure. The coil array **501** provides a pair of leads (nodes) **505** and **506-**-a "send" and a "return" (abbreviated "RTN" in the figures)--to the coil interconnection circuit **502** for each coil in the array. The coil interconnection circuit **502**, responsive to the control signals START_SEL[3:0] **509** and END_SEL[3:0] **510,** then connects a subset of these leads in series, thereby connecting a subset of the coils in the coil array **501** in series. The beginning and end of this serially connected subset are provided to the probe connector **504** as COIL_GROUP_SEND **507** and COIL_GROUP_RTN **508**, respectively.

The probe connector (which references back to the connector **204** in FIGS. **2A** and 2B) is meant to provide a connection point and define the interface for an instrument specially designed to function with the phased scan eddy current array probe. The control signals START_SEL[3:0] **509** and END_SEL [3:0] **510** are provided through the probe connector by this external instrument and, as will be shown in the following discussion of the coil interconnection circuit **502**, select the beginning and the end of the coil subset, respectively. Similarly, a memory interface **511** is provided to communicate with the probe memory device **503.** This interface (and the probe memory device itself) allows the instrument operating with the phased scan eddy current array probe of the present disclosure to store and access a Reference Curve within the probe itself. The following discussion of the methods of the present disclosure will define this Reference Curve and detail its use in the phased scanning methods of the present disclosure.

FIG. **6** illustrates the simplified schematic of the coil interconnection circuit used in the preferred embodiment of the present disclosure. The pairs of leads provided by each coil are connected in such a way that the return lead of each coil is connected to the send lead of each subsequent coil, forming a single node **602**. Only the send lead of the first coil in the array **601** and the return lead of the last coil in the array **603** remain independent nodes. In this way the 32 lines provided by the coil array are reduced to 17, and the entire array is connected in series. Subsets of serially connected coils can now be realized by selecting which two of the 17 nodes are to be connected to the instrument.

The Analog MUX **604** is responsive to the START_SEL[3:0] control **607** and electrically connects one of the first sixteen nodes (the first coil send lead **601** and the 15 pairs of connected return/send leads **602**) to the COIL_GROUP_SEND drive signal **606**, dependent on the selection of said control. In this way the start of the coil subset is selected. Similarly, the Analog DEMUX **605** is responsive to the END_SEL[3:0] control **609** and electrically connects one of the last sixteen nodes (the 15 pairs of connected return/send leads **602** and the last coil return lead **603**) to the COIL_GROUP_RTN signal **608**, selecting the end of the coil subset. In this way, a sequence of values driven onto the control signals (START_SEL[3:0] **607** and END_SEL[3:0] **609**) by the instrument connected to the probe connector (**504** in FIG. **5**) can be devised to create any scan pattern along the 16 elements of the phased array probe.

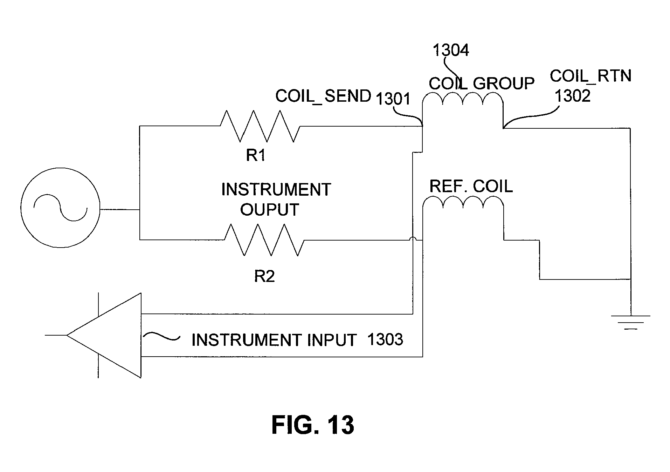

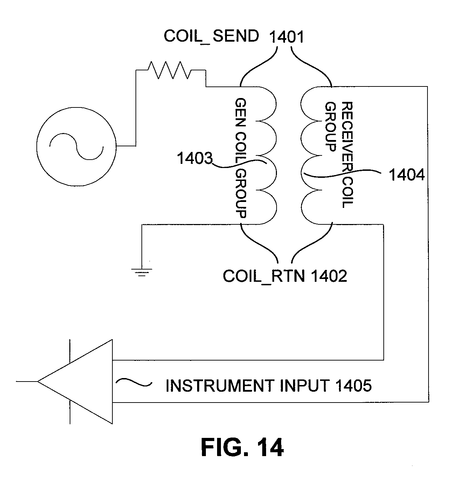

It should be noted that while FIGS. **5** and **6** describe a specific coil interconnection circuit for use with the preferred embodiment of the present disclosure, the present invention is not limited in this regard. Equivalent variations of the coil interconnection circuit, including, but not limited to more complex multiplexer circuits or matrix switches, should be well-known to those skilled in the art and should be considered as represented by the simplified schematic illustrated in FIG. **6**. For example, FIGS, 1**3****,** **14****,** **15**, **15a** and **15b** show that the coil groups can be connected in several configurations to the acquisition unit. In fact, coil groups can be treated as conventional coils connected in absolute configuration (FIG. **13**). Alternatively, pitch-catch or differential configurations may also be realized as shown in FIG. **14****.**

More specifically, FIG. **13** depicts the connection of only one coil group of COIL ARRAY **501**, wherein Coil_Send **1301** represents COIL_GROUP_SEND **507** and **606** shown in FIGS. **5** and **6**, respectively. COIL_RTN **1302** represents COIL_GROUP_RTN **508** and **608** shown in FIGS. **5** and **6**, respectively. For simplicity, COIL GROUP symbol 1304 represents COIL ARRAY **501** and COIL INTERCONNECT CIRCUIT **502** of FIG. **5**, and ANALOG MUX **604** and ANALOG DEMUX **605** of FIG. **6**.

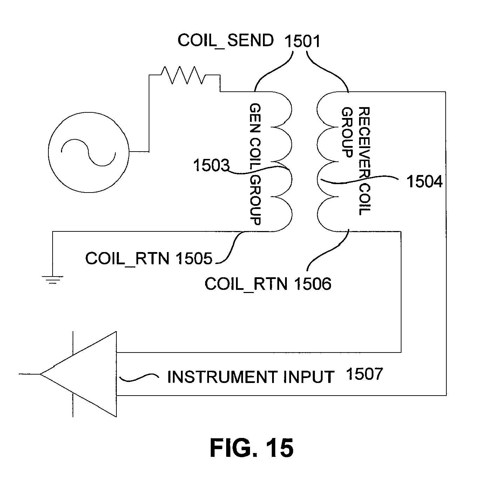

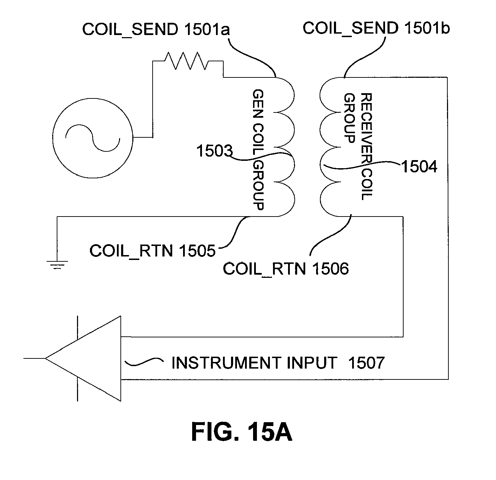

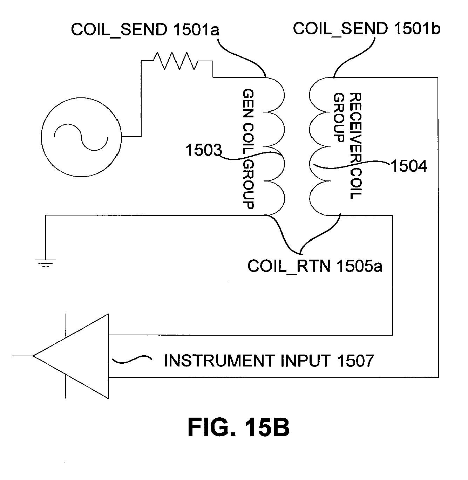

Referring now to FIG. 14, Coil_Send **1401** represents COIL_GROUP_SEND **507** and **606** shown in FIGS. **5** and **6****,** respectively. COIL_RTN **1402** represents COIL_GROUP_RTN **508** and **608** shown in FIGS. **5** and **6**, respectively. For simplicity, COIL GROUP symbols **1403** and 1404 are shown to represent COIL ARRAY 501 and COIL INTERCONNECT CIRCUIT **502** of FIG. **5****,** and ANALOG MUX **604** and ANALOG DEMUX **605** of FIG. **6****.** FIG. **14** shows the scenario when Coil_Send **1401** and COIL_RTN **1402** are connected to two different coil groups within COIL ARRAY **501** (FIG. **5**). Similarly, FIG. **15** shows the scenario when Coil_Send **1501** and COIL_RTN **1505** and **1506** are connected to two different coil groups within COIL ARRAY **501** (FIG. **5**); however, this time COIL_RTN **1505** and **1506** need not be provided to the same COIL_GROUP_RTN **508** and **608**, but instead have one of the two said COIL_RTN's connected to separate COIL_GROUP_RTN 508a (not shown) and 608a (FIG. 6a).

Referring now to FIG. 15a, Coil_Send **1501a** and **1501b**, and COIL_RTN **1505** and **1506** are connected to two different coil groups within COIL ARRAY **501** (FIG. **5**); however, this time COIL_RTN **1505** and **1506** need not be provided to the same COIL_GROUP_RTN **508** and **608,** but instead have one of the two said COIL_RTN's connected to separate COIL_GROUP_RTN **508a** (not shown) and **608a** (FIG. 6a).

Referring now to FIG. 15b, Coil_Send **1501a** and **1501b** are connected to two different coil groups within COIL ARRAY **501** (FIG. **5**); however, this time COIL_RTN **1505a** need not be provided to the same COIL_GROUP_RTN **508** and **608**, but instead have one of the two said COIL_RTN's connected to separate COIL_GROUP_RTN **508a** (not shown) and **608a** (FIG. **6a**).

Similarly, although the coil interconnection circuit of the present disclosure makes use of a set of digital control signals to select the coil groups--a relatively simple control mechanism specifically chosen to maximize the clarity of the present disclosure--the present disclosure is not limited in this regard. Indeed, various combinational logic circuits--including those with more advanced logic functions such as, but not limited to, encoder based automatic sequencing circuits or CPLD or microcontroller based control circuits--to control the switching sequence of a circuit such as the coil interconnection circuit present in FIG. **6** should be well-known by those skilled in the art.

It should also be noted that while larger or more complex arrays may require more advanced scan patterns--such as the two-dimensional scan pattern illustrated in FIG. **4B****-**-a coil interconnection circuit to provide the required subset interconnections can be readily realized by those skilled in the art without undue experimentation. Furthermore, the details and specifics of such a circuit--whether more or less complex than the circuit presented in FIG. **6**--are not limiting or specific to the methods of the present disclosure.

In the same vein, the inventors also contemplate a coil interconnection circuit which is located within the inspection instrument instead of within the probe itself, necessitating a probe connector and cable which direct each pair of coil leads into the instrument.

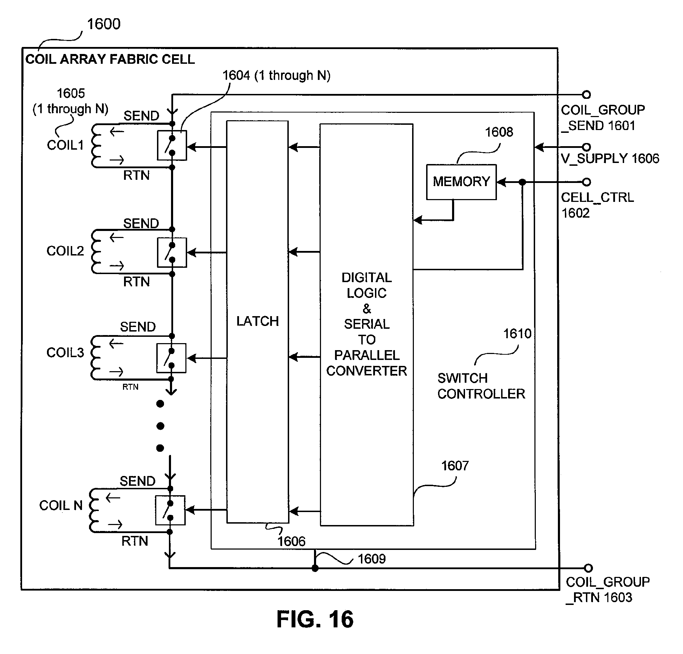

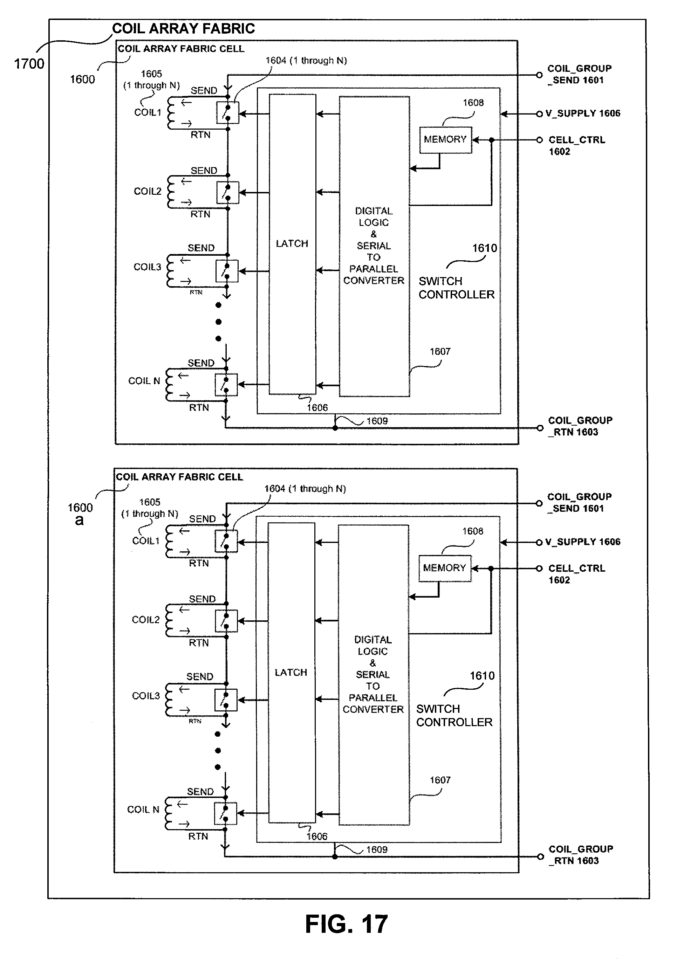

Another embodiment is now described (FIGS. **16** and **17**) that applies the basic method and devices of the present disclosure to realize a coil array fabric cell and coil array fabric that are well suited for ease of assembly, installation, and improved inspection system reliability. The word 'fabric' is used to convey the ability of coil arrays to cover and adapt to a wide variety surface sizes and contours, such as those found on the inspected areas of airplanes bridges, and other structures. The present alternate embodiment provides significant advantages for the coverage of large inspection areas when using eddy current arrays with a large number of coils (FIGS. **4A** and **4B**), the primary advantage being achieved by the placement of miniature switches and associated components in very close proximity to the coil element in order to maximize the area where the coil array fabric surface can be flexed. Because the coil element is typically rigid, flexible fabric area is conserved when other rigid components, such as electronic components, are placed above, within, or below the coil, instead of on other regions of the fabric.

Referring to FIG. **16** and **17**, switches **1604-1** through **1604-N** are connected to the SEND and RTN terminals of **COIL 1** through **N**, respectively, and controlled by signals provided by SWITCH CONTROLLER **1610**. The coil switching topology of the present alternate embodiment provides the means to energize any single coil element, group of coil elements, and a plurality of said elements, within any size array by means of short circuiting the non-energized coils. It is worth noting that the ON resistance of said switches is substantially small to make its effect on device performance negligible. As is well known by those skilled in the art, a magnetic field will not be produced when a coil is short circuited because substantially zero current will be flowing through it.

For the example of energizing a single coil, **COIL3** (FIG. **16**) will be the only coil energized when switches **1604-1, 1604-2** and **1604-N** are closed and switch **1604-3** is open because COIL_GROUP_SEND **1601** will be connected directly to the SEND terminal of **COIL3** and COIL_GROUP_RTN **1603** will be connected directly to the RTN terminal of **COIL3**. It will be obvious to those skilled in the art that any single coil within an array can be energized without energizing any other coil by applying said example with the appropriate ON/OFF switching configuration.

For the example of energizing a group of coil elements, **COIL1** and **COIL2** (FIG. **16**) will be energized when switches **1604-3** through **1604-N** are closed and switches **1604-1** and 1604-2 are open because COIL_GROUP_SEND **1601** will be connected directly to the SEND terminal of **COIL1** and COIL_GROUP_RTN **1603** will be connected directly to RTN terminal of **COIL2.** It will be obvious to those skilled in the art that that any group of coils within an array can be energized without energizing any other coil, or group of coils, by applying said example with the appropriate ON/OFF switching configuration. Furthermore, it will also be obvious to those skilled in the art that a plurality of coil elements and, or, groups in different locations within a serially wired array may be realized by applying said example with the appropriate ON/OFF switching configuration.

Referring again to FIG. 16, COIL ARRAY FABRIC CELL **1600** has the advantage of requiring only four signals be provided to it - i.e. COIL_GROUP_SEND **1601,** V_SUPPLY **1606**, CELL_CTRL **1602**, and COIL_GROUP_RTN **1603** which also serves as the power supply return for SWITCH CONTROLLER **1610.** Said signals are provided to the host eddy current instrument (not shown) and, if necessary, to another COIL ARRAY FABRIC CELL such as **1600a** shown in FIG. 17. Another advantage is that non-volatile MEMORY **1608** of COIL ARRAY FABRIC CELL 1600 stores the desired ON/OFF switching configuration and, if necessary, the switching configuration sequence required to achieve scan patterns, such as those of FIGS. **4A** and **4B**. Accordingly, the following benefits are achieved: a) SWITCH CONTROLLER **1610** can retain the application specific configuration information locally within MEMORY **1608**, thereby allowing host eddy current instruments to be interchanged without the loss of said information; and b) the real-time changing and sequencing of coil array configurations can be much faster than the method that requires the host eddy current instrument to send commands to one or more of COIL ARRAY FABRIC CELL **1600.**

CELL_CTRL **1602** is used to communicate with MEMORY **1608** and DIGITAL LOGIC 1607 in a manner well known to those skilled in the art of 1-wire serial interfaces. Switches **1604-3** through **1604-N** of COIL ARRAY FABRIC CELL **1600** may be configured by the host eddy current instrument directly or by use of MEMORY **1608** in conjunction with preprogrammed DIGITAL LOGIC **1607.**

Although the preferred present alternate embodiment uses a dedicated independent connection for 1-wire serial interface CELL_CTRL **1602,** it is not limited in this regard. Indeed, a parallel control interface may be used in a manner well known to those skilled in the art. Alternatively, the need for a dedicated independent connection of 1-wire serial interface signal CELL_CTRL **1602** may be removed by encoding it into the COIL_GROUP_SEND **1601** signal. The encoding method may be realized by use of separate and distinct time periods for coil array energizing and COIL ARRAY FABRIC CELL 1**600** configuration, respectively; or extraction of the encoded signal prior to being provided to the coil SEND signal of **COIL1** (not shown). Said extraction may be achieved by a number of methods, one of which may be capacitor decoupling of the control signal in order to remove the DC content that is not intended for coil excitation.

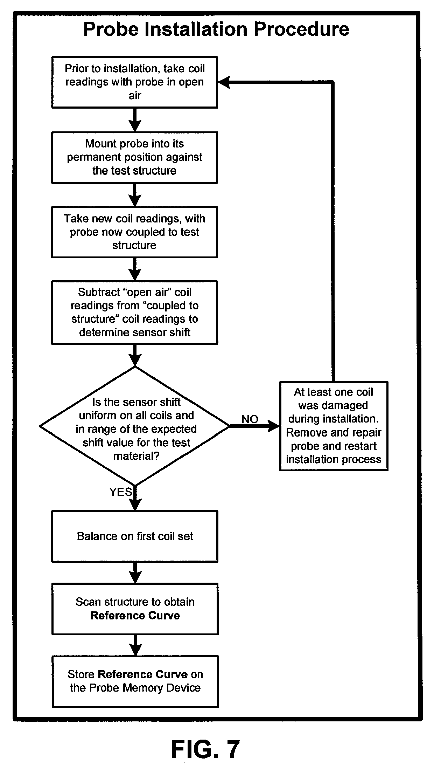

FIG. 7 is a flow chart describing the probe installation procedure as it relates to the methods of the present disclosure. Prior to installation, coil readings are taken on the phased scan eddy current array probe in open air--that is, while the probe is not coupled to any test surface. The value on the impedance plane for each coil is noted, and then the probe is mounted into its permanent position adjacent to the surface of the structure under test. Coil readings are taken again and compared against the impedance plane values noted for the probe in open air. If all the coils in the eddy current array are working properly, a uniform shift in the impedance plane should be observed comparing the coupled to the test surface values and the open air values. The value and tolerance range of this shift, dependent largely on the material type and geometry of the test surface, should be easily anticipated by those skilled in the art. If a coil in the array probe was damaged during the installation process, the sensor shift observed in this step will be some unexpected value, most likely saturating to an extreme range in the impedance plane. If this is the case, the array probe should be removed from the structure under test, repaired or replaced, and the installation process started again.

Once the probe is successfully mounted to the surface of the structure under test, a Reference Curve is taken and stored within the array probe's internal memory device. This Reference Curve will be used on subsequent inspection scans to provide an effective balancing algorithm since the array probe cannot be accessed or removed from the structure under test to make use of conventional balancing techniques.

Probe balancing in an eddy current inspection process should be a technique well-known to those skilled in the art. The coils in an eddy current array probe are coupled to a test surface--typically a known good reference object of identical geometry and composition to that of the structure under test--and zeroed. That is, the return signal of each coil is adjusted, or balanced, such that it reads zero in the impedance plane. In this way, any deviations in the return signals provided by the probe when coupled to the surface of the structure under test will be experienced as values offset from the baseline of the impedance plane, providing an easily readable and uniform scan of the surface of the structure under test.

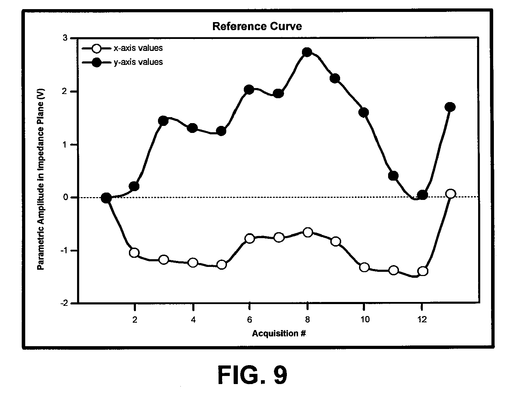

Before the Reference Curve is taken, the phased scan eddy current array probe is first balanced using its first subset of coils. That is, the response signal from the array probe is adjusted such that the reading from the first subset of coils is exactly zero in the impedance plane. The surface of the structure under test is then scanned--using the phased scanning method of the present disclosure--and the response values in the impedance plane stored in the probe memory device. An exemplary Reference Curve taken using the phased scan eddy current array probe of the present disclosure is shown as a parametric measurement plot in FIG. **9**--it should be noted that the readings (both the x-axis and y-axis values) are exactly zero for the readings acquired with the first coil subset (Acquisition #1).

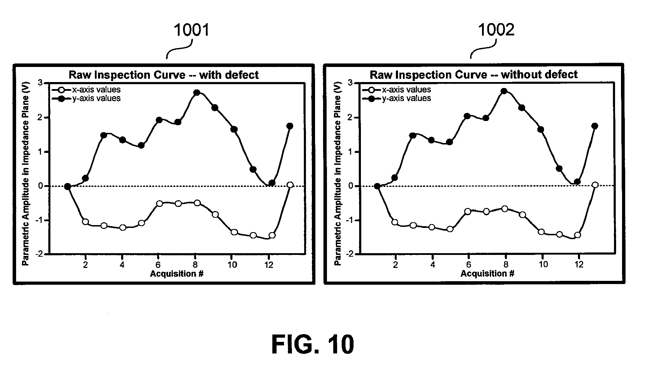

It should be noted at this point in the discussion that the impedance plane values in the Reference Curve measurement plot in FIG. **9** and of those in the measurement plots of subsequent figures (FIGS. **10****,** **11A****,** **11B****,** **12A**, and **12B**) are represented parametrically. That is, the horizontal (x-axis) and vertical (y-axis) positions of each measurement reading (each subset's acquisition) are plotted separately. This technique--which should be well-known to those skilled in the art--has been used to simplify the measurement plots and aid in the discussion of the methods of the present disclosure.

It should also be noted that the measurement plots produced by the methods of the present disclosure--as represented in FIGS. **9****,** **10****,** **11A****,** **11B****,** **12A**, and **12B**--produce a single "strip chart" of data representing the entire phased scan. That is, the data points shown on the plot are the measurement readings taken by each coil subset--only one reading per subsetplotted on the vertical axis against the acquisition number (that is, in what order each coil subset was energized) on the horizontal axis. This differs from measurement plots taken with conventional eddy current scanning methods, wherein each coil in the array produces a separate "strip chart" as it is moved across the test surface, plotting sequential measurement readings taken by each coil on the vertical axis against its linear displacement with respect to the test surface on the horizontal access.

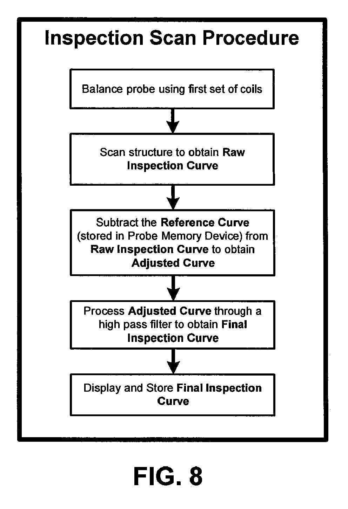

FIG. **8** is a flow chart describing the phased scanning method of the present disclosure. Each test scan begins by balancing the phased scan eddy current array probe of the present disclosure using the first subset of coils. That is, again, the response signal from the array probe is adjusted such that the reading from the first coil subset is exactly zero in the impedance plane. The structure is then scanned using the phased scanning method of the present disclosure to produce the Raw Inspection Curve. Two exemplary Raw Inspection Curves taken using the phased scan eddy current array probe of the present disclosure--one scanned from a part with a defect **1001** and one scanned on a part without a defect **1002**--are shown as parametric measurement plots in FIG. **10****.** As in the plot of the exemplarily Reference Curve FIG. **9**, it should be noted that the readings (both the x-axis and y-axis values) are exactly zero in both plots **1001** and **1002** for the measurement data acquired with the first coil subset (Acquisition #1).

Comparing the exemplarily Raw Inspection Curves **1001** and **1002** in FIG. **10** to the exemplarily Reference Curve FIG. **9** will show that all three sets of curves are nearly congruent and, indeed, seem nearly identical to a cursory visual inspection. The measurement data presented in the exemplarily Raw Inspection Curve of the defective part **1001**, however, does show evidence of a defect at Acquisition #6. This defect is obscured because a proper balancing could not be preformed prior to the scan. While this effect can be minimized using what the industry terms as an "extremely reproducible probe"--that is, a probe with coils precisely manufactured and assembled with a uniform liftoff such that the signals returned from said coils during an inspection scan can be reliably anticipated, thereby significantly reducing the need for balancing--such a probe is not well-suited to curved or otherwise complex geometries nor cost effective in large scale inspection operations. The effective balancing method of the present disclosure presents a simpler solution, one which can be used with standard coils arranged in practically any geometry, to isolate and uncover this defect in the surface of the structure under test, as will be shown in the following discussion.

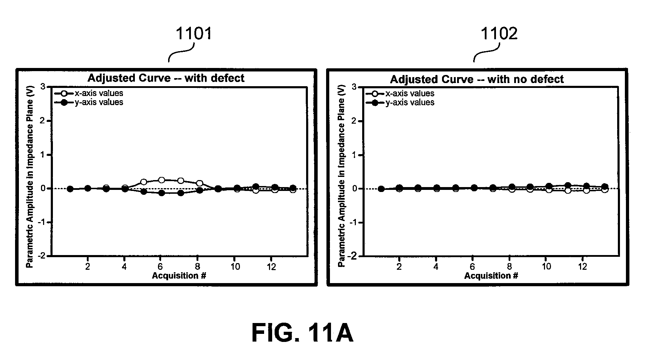

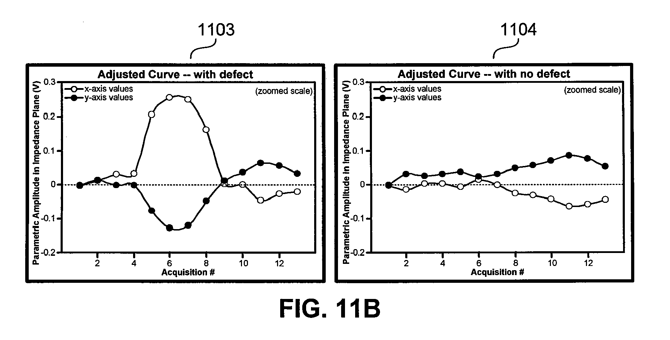

Referring again to FIG. **8**, after obtaining the Raw Inspection Curve, an Adjusted Curve is created by recalling the Reference Curve--which was obtained and stored during the probe installation process--and subtracting it from the Raw Inspection Curve. A pair of exemplary Adjusted Curves (shown in FIG. **11A**) are calculated using the measurement data of the exemplary Reference Curve FIG. **9** and that of the exemplary Raw Inspection Curves **1001** and **1002.** For convenience, the Adjusted Curve measurement plots are also redrawn with a zoomed scale in FIG. **11B** to better illustrate the adjusted measurement data.

Comparing the exemplarily Adjusted Curves in FIGS. **11A** and **11B** to the exemplarily Raw Inspection Curves in FIG. **10****,** it can be seen that the measurement data has been moved to the baseline in the impedance plane, approximating data taken from a conventionally balanced array probe. Looking to the Adjusted Curve from the scan of the defective part **1101/1103,** the defect seen on Acquisition #6 is now much clearer and more distinct against the remainder of the now effectively balanced scan. Despite this improvement, however, some impedance plane offset from the baseline is still visible in the measurement data of the other, ostensibly defect free acquisitions in both the scan of the defective structure **1101/1103** and the scan of the defect free structure **1102/1104.**

This additional offset is largely caused by the fact that the exemplarily Reference Curve scan in FIG. **9** and the exemplarily Raw Inspection Curve scans in FIG. **10** were taken under different measurement conditions, such as, but not limited to, physically different inspection instruments, different ambient temperatures about the test structure at the time of the scans, and aging of both the test structure and the array probe in the intervening time between the scans. This additional noise in the measurement data represents a potential limitation to the effectiveness of the phased scanning method of the present disclosure. This potential limitation is overcome with the additional step of processing the Adjusted Curve measurement data through a high pass filter.

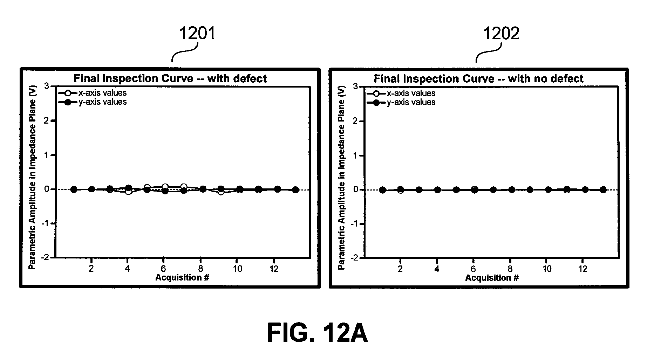

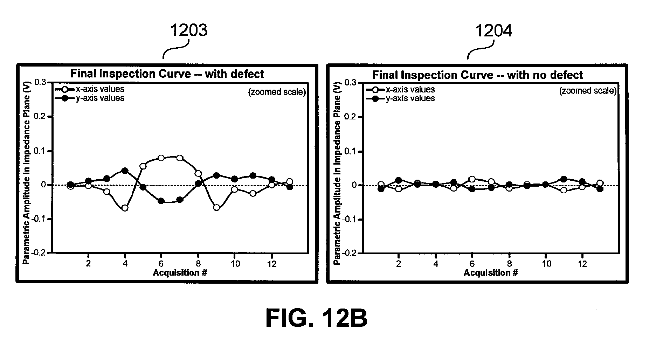

FIG. **12A** shows the measurement data of the exemplarily Adjusted Curves for both the defective test structure **1101** and defect free test structure **1102** after being processed through a high pass filter. These new measurement curves--labeled Final Inspection Curve--are also plotted in FIG. **12B** on a zoomed scale to better highlight the measurement data. Comparing FIG. **11B**--specifically the ratio of the baseline offset (noise) seen in the Adjusted Curve of the scan of the defect free part **1104** to the signal height of the defect seen in the Adjusted Curve of the defective part **1103**--against FIG. **12B**--making the same comparison of the respective Final Inspection Curves **1204** and **1203**--it can be seen that the signal-to-noise ratio in the measurement data has been significantly increased.

While the exemplary inspection operation used to demonstrate the preferred embodiment of the present disclosure comprises a mechanical assembly in which the phased scan eddy current array probe of the present disclosure is permanently fixed to the test structure and otherwise inaccessible, the present disclosure is not limited in this regard. Indeed, the phased scanning method and the phased scan eddy current array probe of the present disclosure can be used in any situation where it is inconvenient or undesirable to move the array probe along the desired scan axis.

To this end, the inventors conceive of an additional exemplary inspection operation of a test structure which uses a linear phased scan eddy current array probe to provide a complete and continuous scan along the width of a test structure while the array probe is mechanically moved across the length of said test structure, orthogonal to the direction of the phased scan. In this way a simple linear array probe can provide a complete raster scan of the surface of the test structure while moving the array probe in only one dimension with respect to the surface of the test structure.

Although the present invention has been described in relation to particular embodiments thereof, many other variations and modifications and other uses will become apparent to those skilled in the art. It is preferred, therefore, that the present invention not be limited by the specific disclosure herein.

## Claims

1. A non-destructive inspection system for testing an object, comprising:
an eddy current array probe including a plurality of inspection coils interconnected at nodes;
a signal generator for outputting an excitation signal;
a coil interconnection circuit coupled to the signal generator and effective to couple the excitation signal to groups of the inspection coils, when each group includes less than all of said inspection coils; and
a controller for controlling the coil interconnection circuit to sequentially output the excitation signal so as to sequentially energize selected groups of said inspection coils, in manner effective to scan the object for structural defects while eliminating blind spots between individual coils.

2. The system of claim 1, in which the inspection coils are arranged in a matrix, which is either one dimensional or multi-dimensional and the coils thereof are serially connected.

3. The system of claim 1, in which the coil interconnection circuit is configured to simultaneously inject the excitation signal into multiple groups of said inspection coils.

4. The system of claim 1, in which the controller is operable to cause the excitation signal to be injected into successively selected groups of the coils.

5. The system of claim 1, in which the coil interconnection circuit comprises at least one multiplexer and at least one demultiplexer.

6. The system of claim 1, in which the controller is effective to control the coil interconnection circuit such that each group of selected coils includes at least one coil of a previously selected coil group.

7. The system of claim 1, in combination with an object to be tested and to which object the inspection system is stationarily affixed.

8. The system of claim 1, in which the coil interconnection circuit comprises a combinational logic circuit, or an encoder based automatic sequencing circuit.

9. The system of claim 1, further comprising a housing enclosing said inspection system and a wireless transmitter effective to transmit scan data from within the housing to a scan data receiver associated therewith.

10. The system of claim 1, in which the coil inspection circuit is configured to couple the excitation signal to at least one of the nodes, and define at least one return node for the excitation signal at at least one of the nodes.

11. The system of claim 1, in which the coil interconnection circuit comprises switches connected in parallel across the inspection coils and a control circuit for the switches that is capable of turning on and off the parallely-connected switches to enable the excitation signal to pass through only selected ones of the inspection coils during each signal excitation cycle.

12. A method of inspecting an object non-destructively, comprising the steps of:
providing an eddy current array probe, including a plurality of inspection coils interconnected at nodes;
sequentially energizing successive groups of the inspection coils to induce eddy currents in the object; and
controlling the selection of successive groups such that each successively energized group of the inspection coils includes at least one inspection coil of a previously selected group, in a manner effective to avoid creating blind spots between successively selected inspection coil groups.

13. The method of claim 12, including utilizing a coil interconnection circuit to effect the selection of groups of the inspection coils.

14. The method of claim 12, including energizing the inspection coils linearly.

15. The method of claim 12, including selecting and energizing the inspection coils such that each selected group has coils which are arranged in a multi-dimensional matrix.

16. The method of claim 12, including generating a reference curve based on impedance measurement of the probe during installation of the probe on the object.

17. The method of claim 14, including balancing the probe by reference to a first set of coils thereof, through the generation of an impedance curve that is referenced to the reference curve stored in the probe, to create an adjusted curve.

18. The method of claim 15, including filtering the adjusted curve with a high pass filter to effect balancing of the probe.

19. The method of claim 12, including utilizing the probe by moving the probe along a surface of the object.

20. The method of claim 12, including energizing more than one group of coils simultaneously.
